Europäisches Patentamt

European Patent Office

Office européen des brevets

(11) Veröffentlichungsnummer: **0 090 335**
**B1**

(12) **EUROPÄISCHE PATENTSCHRIFT**

(45) Veröffentlichungstag der Patentschrift: **28.09.88**

(21) Anmeldenummer: **83102849.3**

(22) Anmeldetag: **22.03.83**

(51) Int. Cl.⁴: **B 04 C 5/181,** B 01 D 45/12

(54) Zyklonabscheider.

(30) Priorität: **30.03.82 DE 3211783**

(43) Veröffentlichungstag der Anmeldung:
**05.10.83 Patentblatt 83/40**

(45) Bekanntmachung des Hinweises auf die
Patenterteilung:
**28.09.88 Patentblatt 88/39**

(84) Benannte Vertragsstaaten:
**AT BE CH GB LI NL**

(56) Entgegenhaltungen:
**DE-B-1 165 390**
**DE-B-1 292 479**
**FR-A-1 065 209**
**FR-A-1 091 006**
**FR-A-2 000 597**
**FR-A-2 471 815**
**GB-A- 477 621**

(73) Patentinhaber: **Siemens Aktiengesellschaft**
**Berlin und München**
**Wittelsbacherplatz 2**
**D-8000 München 2 (DE)**

(72) Erfinder: **Lösel, Georg**
**Kirchenweg 3**
**D-8521 Uttenreuth (DE)**
Erfinder: **Schneider, Egon**
**Schwalbenweg 9**
**D-8521 Grossenseebach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft einen Zyklonabscheider zur Entfernung von Partikeln aus einem gasförmigen Trägermedium, mit einem rotationssymmetrischen Gehäuse mit vertikaler Rotationsachse, in dessen oberen Bereich ein annähernd horizontaler Einlaßstutzen mit gegenüber der Wand des Gehäuses tangentialer Richtung führt, mit einem Gasauslaß an der oberen Stirnseite des Gehäuses und mit einem unter dem Gasauslaß angeordneten Wandelement, die ein längs der Rotionsachse verlaufendes, durch das Wandelement nach oben führendes zylindrisches Rohr trägt.

Ein aus der FR—A—1 065 209 bekannter Zyklonabscheider der vorstehend genannten Art sammelt die Partikel, die fest oder flüssig sein können, in einem unten mit einem Ventil abgeschlossenen Bunker. Dabei soll die im Querschnitt halbkreisförmige oder halbellipsoidale Platte das Abscheiden von Partikeln verbessern, die durch einen Ringspalt zwischen der Zylinderwand einer Wirbelkammer und der Platte in den Bunker gelangen, während gleichzeitig Gase aus dem Bunker in die Wirbelkammer aufsteigen. Ein solcher geschlossener Bunker ist aber selbst dann, wenn er öfters entleert wird, nur für geringe Partikelmengen geeignet, wie sie bei der Staubabscheidung zu erwarten sind, die auch die Form der Platte in dem bekannten Zyklonabscheider bestimmt, an der das Rohr auch an der Unterseite sitzen kann.

Zur Staubabscheidung dient auch eine aus der FR—A—2 471 815 bekannte Anordnung von mehreren Zyklonabscheidern, die von einer gemeinsamen Rohgasleitung gespeist werden und Partikel in einen gemeinsamen unteren Bunke abgeben, während das Reingas nach oben in einen gemeinsamen Sammelraum abströmt. Die untere Stirnseite der einzelnen Zyklonabscheider wird von einer Platte gebildet, deren innere Oberfläche zu einer Höhe konisch aufgewölbt ist, die ein Drittel des Durchmessers beträgt. Die konische Aufwölbung soll zur Führung des Gases dienen und enthält kleine interne Bohrungen, die vorzugsweise auf einem Kreis liegen. Die zur Fuhrung des Gases dienende Oberfläche kann bei anderen Ausführungsformen auch einen rotationssymmetrischen direkten oder umgekehrten Parabelquerschnitt haben. Hier beträgt die in der Patentschrift nicht angesprochene Höhe nach den Zeichnungen die Hälfte des Durchmessers. Eine durch die Aufwölbung verlaufende zentrale Bohrung ist an der der Gasleitfläche gegenüberliegenden Seite zu einer Stufe mit dem dreifachen Durchmesser aufgeweitet.

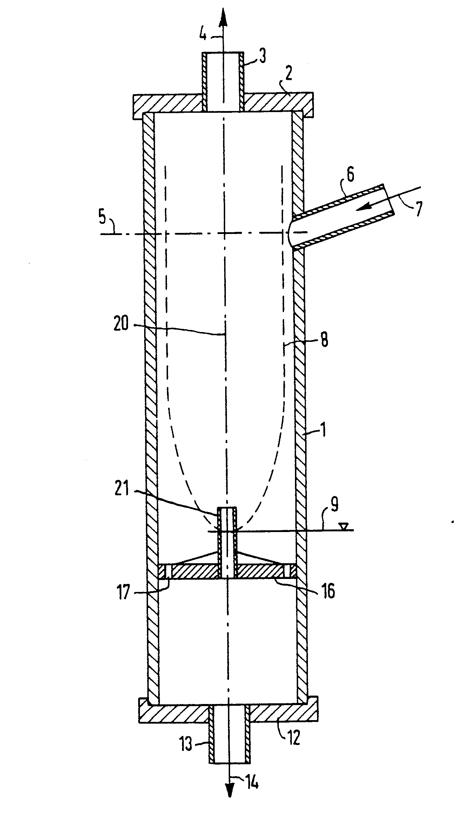

Die Erfindung bezweckt im Gegensatz zu dem vorstehend behandelten Stand der Technik eine Verbesserung der Abscheidung von Flüssigkeiten aus einem Flüssigkeits-Gas-Gemisch, wie sie in Dampfkraftwerken bei Durchsätzen von Hunderten bis Tausenden von Tonnen pro Stunde vorgenommen wird. Ein dafür verwendeter Zyklonabscheider ist zum Beispiel in der Zeitschrift "VGB-Kraftwerkstechnik", Heft 12, Dez. 1973 in dem Aufsatz "Kessel und Feuerungen für 600-MW-Blöcke für Braunkohle", Seiten 772 bis 791 in Bild 13 dargestellt. Er umfaßt ein zylindrisches Gehäuse, in dessen oberen Bereich annähernd tangential verlaufende Einlaßstutzen angebracht sind, die in einer horizontalen Ebene münden. Gegenüber dieser Ebene sind sie schwach geneigt, so daß Flüssigkeit, die sich in den Einlaßstutzen absetzt, in der Abscheider hineinrinnen kann.

In der Rotationsachse des Abscheiders liegend ist an der unteren Stirnseite des zylindrischen Gehäuses eine Auslaßleitung angebracht. Darüber sitzt eine Platte, die mit vertikalen Rippen an der Innenwand des Gehäuses angebracht ist. Dies ist ein sogenannter Drallbrecher, denn die Rippen wirken als vertikale Leitvorrichtung, mit der die Rotationsenergie der abströmenden Flüssigkeit verringert wird. Damit soll erreicht werden, daß die Flüssigkeit keine Gase mitreißt.

Aufgabe der Erfindung ist es, den Wirkungsgrad von Zyklonabscheidern bei der Trennung von Flüssigkeit und Gas zu verbessern, weil sich gezeigt hat, daß trotz der vertikalen Leitvorrichtung Gas bis in den Flüssigkeitsauslaß hinein mitgerissen wird, das dort in Form eines Zopf genannten Gasblasenwirbels den Flüssigkeitsauslaß behindert.

Gemäß der Erfindung ist vorgesehen, daß das Wandelement als eine horizontale, ebene, Platte ausgebildet, zur Abscheidung von Flüssigkeit aus einem Flüssigkeits-Gas-Gemisch über einem Flüssigkeitsauslaß in der unteren Stirnseite des Gehäuses angeordnet und mit das Rohr umgebenden, vertikalen Leitvorrichtungen versehen ist, daß der Durchmesser des Rohres 1/10 bis 1/30 des Durchmessers der Platte beträgt und daß das Rohr um mindestens das Doppelte seines Durchmessers über die Platte hinausragt.

Mit der Erfindung kann eine erstaunliche Verbesserung des Abscheiderwirkungsgrades erreicht werden. Bei Versuchen hat sich klar gezeigt, daß der Zopf, also die mit der Flüssigkeit mitgerissene Gassäule in der Achse des Abscheiders, völlig vermieden werden kann. Das Rohr, das um mindestens das Doppelte seines Durchmessers über die Platte hinausragt, übt dabei eine gewisse "Kaminwirkung" aus.

Die freie Länge des Rohres, also seine Höhe über der Platte, kann vorteilhaft mindestens 1/10 des Durchmessers des Abscheidergehäuses im Bereich der Platte betragen. Damit kann erreicht werden, daß die Mündung des Rohres oberhalb des normalen Wasserspiegels im Abscheider liegt. Versuche haben aber gezeigt, daß eine wesentliche Verbesserung des Abscheiderwirkungsgrades auch schon eintritt, wenn das Rohr noch unterhalb des Wasserspiegels endet.

Zur näheren Erläuterung der Erfindung wird anhand der beiliegenden Zeichnung ein Ausführungsbeispiel beschrieben. Dabei zeigt die Figur in einem Vertikalschnitt ein schematisiertes Abscheidermodell nach der Erfindung zur Trennung eines Dampf-Wasser-Gemisches.

Der Zyklonabscheider umfaßt ein zylindrisches Gehäuse 1, das an seiner oberen Stirnseite mit einer oberen Deckelplatte 2 verschlossen ist. Die Deckelplatte 2 ist eine ebene Kreisscheibe mit einem Durchmesser D von zum Beispiel 600 mm für die Anwendung in Dampfkraftwerken, für die die Erfindung in erster Linie in Betracht kommt. In der Mitte der Platte 2 sitzt das Dampfauslaßrohr 3, so daß der Dampf in Richtung des Pfeiles 4 nach oben entweichen kann. In einem Abstand zwischen 0,8 und 1,5 D unterhalb der Deckelplatte 2 liegt die strichpunktiert angedeutete Eintrittsebene 5 der tangential angeordneten Einlaßstutzen 6. Durch diese wird in Richtung des Pfeiles 7 das Wasser-Dampf-Gemisch zugeführt. Es bildet sich eine rotierende Strömung, bei der der Flüssigkeitsspiegel im Abscheider eine parabolische Form mit der gestrichelt dargestellten Oberfläche 8 aufweist. Der tiefste Punkt des Wasserspiegels ist bei 9 angedeutet.

Die untere Stirnseite des Zyklonabscheiders ist gleichfalls mit einer ebenen, kreisförmigen Platte 12 verschlossen. In der Mitte des Kreises ist der Flüssigkeitsauslaß 13 angeordnet, so daß die Flüssigkeit in Richtung des Pfeiles 14 abgezogen werden kann.

Unterhalb des Wasserspiegels 9 ist etwa im Abstand 0,8 bis 1,5 D von der Platte 12 als vertikale Leitvorrichtung eine ebene Platte 16 an der Innenseite des Gehäuses angebracht, die an ihrem äußeren Rand auf einem Kreis liegende, vertikale Bohrungen 17 aufweist. Die Bohrungen 17 erzwingen wegen ihrer im Verhältnis zum Durchmesser etwa doppelt so großen Länge einen weitgehend vertikalen Verlauf des durchtretenden Wassers, so daß der Drall im Raum unterhalb der Platte 16 wesentlich verringert ist.

In der Rotationsachse verlaufend, die in der Figur durch die strichpunktierte Gerade 20 dargestellt ist, ist ein Rohr 21 in die Platte 16 eingesetzt. Das Rohr 21 hat bei einem Plattendurchmesser von 600 mm einen Kreisquerschnitt mit einem Durchmesser von 50 mm. Seine Länge beträgt mit 300 mm etwa 50% des Plattendurchmessers. Das Rohr 21 ist eine Abzugsmöglichkeit für vom Wasser mitgerissenen Dampf, der aufgrund der Druckverhältnisse im Abscheider eine wesentliche Verbesserung des Abscheiderwirkungsgrades zur Folge hat. Jedenfalls ist der früher beobachtete Zopf im Bereich des Flüssigkeitsauslasses 13 vollständig beseitigt.

Bei dem schematisch dargestellten Ausführungsbeispiel ist das Rohr 21 durch die Platte 16 hindurchgeführt. Das Rohr 21 kann aber auch auf die Platte aufgesetzt werden, so daß in der Platte selbst nur eine mit dem Rohr 21 übereinstimmende Bohrung vorgesehen ist. Überlicherweise hat ein eingesetztes Rohr jedoch eine größere mechanische Festigkeit, so daß Schwingungserscheinungen vermieden werden.

## Patentansprüche

1. Zyklonabscheider zur Entfernung von Partikeln aus einem gasförmigen Trägermedium, mit einem rotationssymmetrischen Gehäuse (1) mit vertikaler Rotationsachse (20), in dessen oberen Bereich ein annähernd horizontaler Einlaßstutzen (6) mit einer gegenüber der Wand des Gehäuses (1) tangentialen Richtung führt, mit einem Gasauslaß (3) an der oberen Stirnseite (2) des Gehäuses (1) und mit einer unter dem Gasauslaß (3) angeordneten Wandelement (16), das ein längs der Rotationsachse (20) verlaufendes, durch die Platte nach oben führendes zylindrisches Rohr (21) trägt, dadurch gekennzeichnet, daß das Wandelement als eine horizontale, ebene, Platte (16) ausgebildet, zur Abscheidung von Flüssigkeit aus einem Flüssigkeits-Gas-Gemisch über einem Flüssigkeitsauslaß (13) in der unteren Stirnseite (12) des Gehäuses (1) angeordnet und mit das Rohr (21) umgebenden, vertikalen Leitvorrichtungen (17) versehen ist, daß der Durchmesser des Rohres (21) 1/10 bis 1/30 des Durchmessers der Platte (16) beträgt und daß das Rohr (21) um mindestens das Doppelte seines Durchmessers über die Platte (16) hinausragt.

2. Zyklonabscheider nach Anspruch 1, dadurch gekennzeichnet, daß die freie Länge des Rohres (21) mindestens 1/10 des Durchmessers des Gehäuses (1) im Bereich der Platte (16) beträgt.

## Revendications

1. Séparateur cyclone pour retirer des particules d'un milieu porteur gazeux, et comportant un carter (1) à symétrie de révolution, possédant un axe de rotation vertical (20) et dans la partie supérieure duquel une tubulure d'admission (6) approximativement horizontale s'étend dans une direction tangentielle par rapport à la paroi du carter (1), et comportant une sortie (3) pour le gaz, située au niveau de la face frontale supérieure (2) du carter (1) et un élément de paroi (16) disposé au-dessous de la sortie (3) des gaz et portant un tube cylindrique (21) disposé suivant l'axe de rotation (20) et traversant la plaque en direction du haut, caractérisé par le fait que l'élément de paroi, réalisé sous la forme d'une plaque plane horizontale (16), est disposé au-dessus d'une sortie (13) pour le liquide, ménagée dans la face frontale inférieure (12) du carter (1) de manière à séparer le liquide d'un mélange liquide-gaz, et comporte des dispositifs verticaux de guidage (17) entourant le tube (21), que le diamètre du tube (21) est compris entre 1/10-ème et 1/30-ème du diamètre de la plaque (16) et que le tube (21) fait saillie au-dessus de la plaque (16), sur une hauteur égale au moins au double de son diamètre.

2. Séparateur cyclone suivant la revendication 1, caractérisé par le fait que la longueur libre du tube (21) est égale au moins à 1/10-ème du diamètre du carter (1) au niveau de la plaque (16).

## Claims

1. A cyclone separator for removing particles from a gaseous carrier, having an axially symmetrical housing (1) with a vertical axis of rotation (20), an approximately horizontal inlet connection piece (6) leading into its upper region in a tangential direction relative to the wall of the housing (1), having a gas outlet (3) on the upper end (2) of the housing (1) and having arranged under the gas outlet (3) a wall arrangement (16) which carries a cylindrical tube (21) running along the axis of rotation (20), leading upwards through the plate, characterised in that the wall element is in the form of a horizontal, flat plate (16) and, for the purpose of separating liquid from a liquid gas mixture, is arranged above a liquid outlet (13) in the lower end (12) of the housing (1) and is provided with vertical passage means (17) surrounding the tube (21), in that the diameter of the tube (21) is from 1/10 to 1/30 of the diameter of the plate (16) and in that the tube (21) project above the plate (16) by at least twice its diameter.

2. A cyclone separator according to claim 1, characterised in that the free length of the tube (21) is at least 1/10 of the diameter of the housing (1) in the region of the plate (16).